(19) **Europäisches Patentamt / European Patent Office / Office européen des brevets**

(11) **EP 2 003 368 A2**

(12) **EUROPEAN PATENT APPLICATION**
published in accordance with Art. 153(4) EPC

(43) Date of publication:
**17.12.2008 Bulletin 2008/51**

(51) Int Cl.:
**F16H 1/32** $^{(2006.01)}$

(21) Application number: **07739881.6**

(22) Date of filing: **27.03.2007**

(86) International application number:
**PCT/JP2007/056443**

(87) International publication number:
**WO 2007/116756 (18.10.2007 Gazette 2007/42)**

(84) Designated Contracting States:
**DE FR**

(30) Priority: **31.03.2006 JP 2006097828**

(71) Applicant: **JTEKT Corporation**
**Osaka-shi**
**Osaka 542-8502 (JP)**

(72) Inventors:
• **YAMAMORI, Motoyasu**
**Osaka-shi**
**Osaka 542-8502 (JP)**
• **OGATA, Toshiaki**
**Osaka-shi**
**Osaka 542-8502 (JP)**

(74) Representative: **TBK-Patent**
**Bavariaring 4-6**
**80336 München (DE)**

(54) **FLEXIBLE MESHING-TYPE GEAR DEVICE AND STEERING DEVICE FOR VEHICLE**

(57)     On the tooth surface of each internal tooth of a fixed internal gear, a meshing surface is provided that conforms to a locus on which the tooth top edge of each external tooth of a flexible external gear moves based on rotation of a wave generator. Similarly, on the tooth surface of each internal tooth of a movable internal gear, a meshing surface is provided that conforms to a locus on which the tooth top edge of each external tooth of the flexible external gear moves based on the wave generator.

**Fig.4(a)**

**Fig.4(b)**

**EP 2 003 368 A2**

## Description

TECHNICAL FIELD

The present invention relates to a flexible meshing-type gear device including a fixed internal gear, a movable internal gear, a flexible external gear meshing with these internal gears, and a wave generator supporting the flexible external gear from the inner circumference thereof so as to allow a relative rotation, and also relates to a steering device for a vehicle including the flexible meshing-type gear device.

BACKGROUND ART

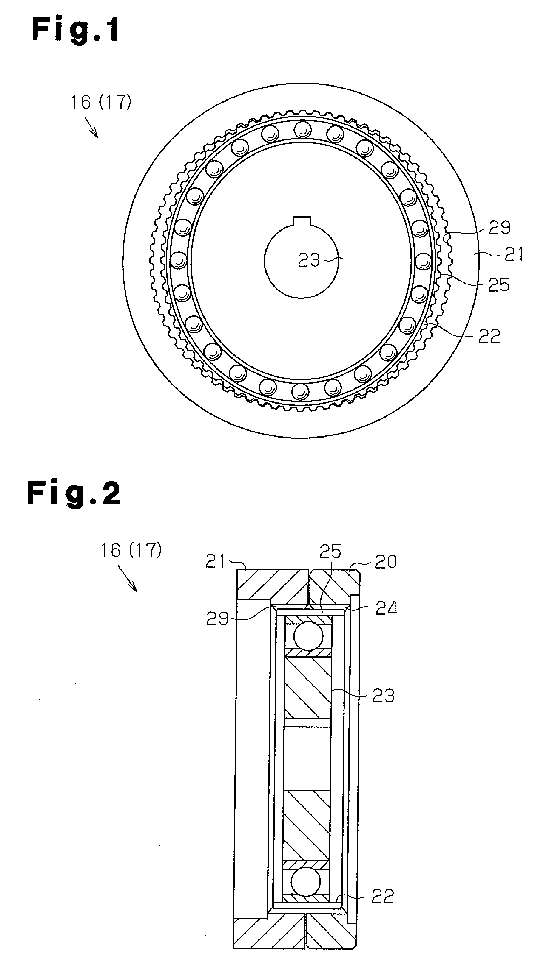

Conventionally, one type of these flexible meshing-type gear devices is constituted as shown in Figs. 1 and 2. Specifically, the flexible meshing-type gear device 16 is provided with an annular fixed internal gear 20 (illustrated in Fig. 2) fixed and supported on a housing (not illustrated) and an annular movable internal gear 21 adjacent to the fixed internal gear 20, and a flexible external gear 22 capable of meshing with these internal gears 20 and 21 is arranged inside the fixed internal gear 20 and the movable internal gear 21. The flexible external gear 22 is supported by a wave generator 23 arranged thereinside so as to mesh with the fixed internal gear 20 and the movable internal gear 21. Next, when the wave generator 23 is rotated, a position at which the flexible external gear 22 meshes with both of the internal gears 20 and 21 is moved by the wave generator 23 in a direction in which the wave generator 23 rotates. As a result, the rotation input to the wave generator 23 is output from the movable internal gear 21 based on the difference in the number of teeth between the flexible external gear 22 and at least one of the fixed internal gear 20 and movable internal gear 21.

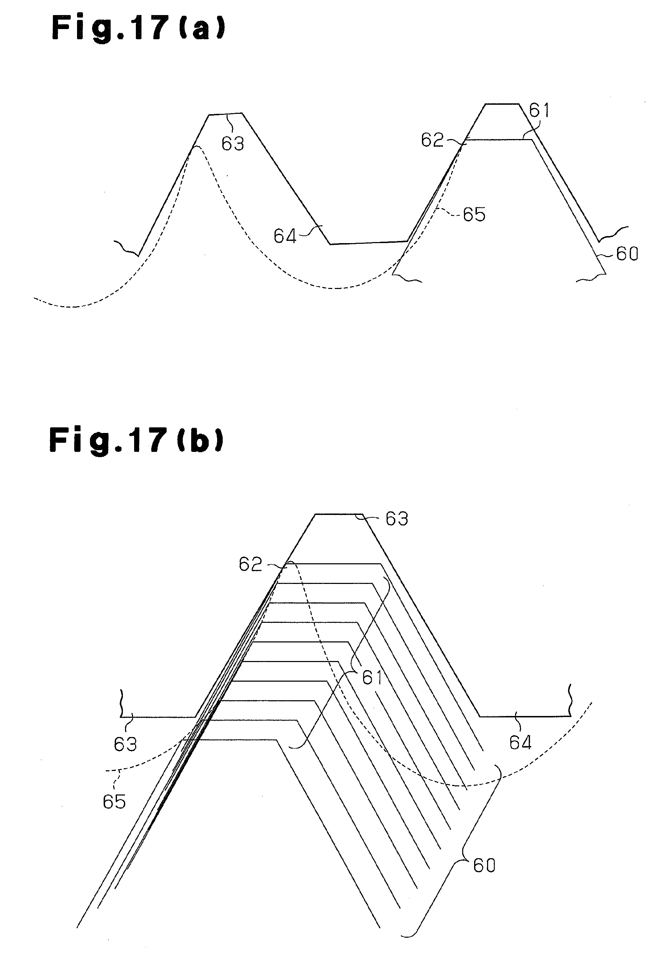

As shown in Fig. 17(a) and 17(b), a flexible external gear 60 rotates relative to a fixed internal gear 63. Therefore, one tooth top edge 62 of an external tooth 61 of the flexible external gear 60 moves on a locus 65 indicated by the broken line crossing over an internal tooth 64 with respect to the internal tooth 64 of the fixed internal gear 63. Thus, each external tooth 61 of the flexible external gear 60 repeats a movement by which the tooth top edge 62 is brought into contact with a part of the tooth surface of the internal tooth 64 of the fixed internal gear 63 substantially at one point.

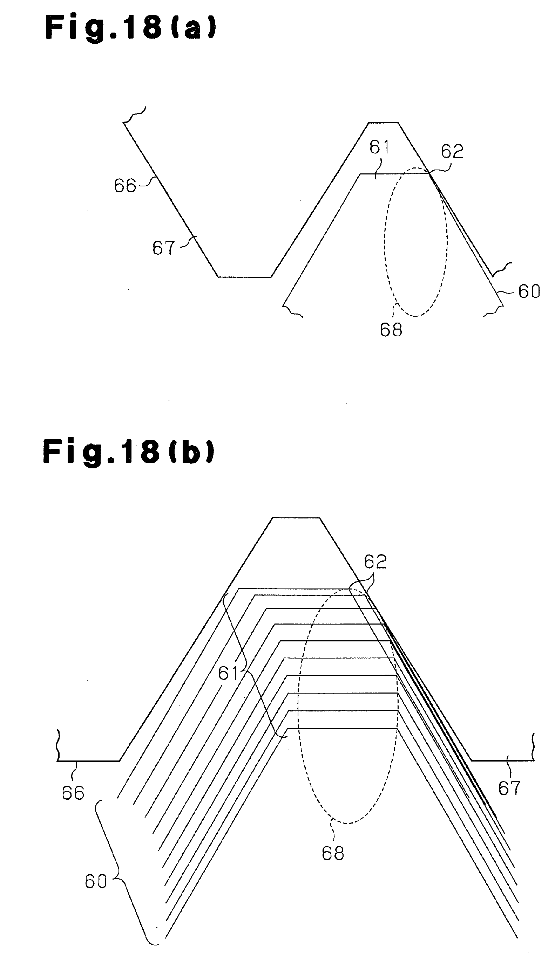

Further, as shown in Fig. 18 (a) and 18(b), where the flexible external gear 60 is equal in the number of teeth to the movable internal gear 66, one tooth top edge 62 of the external tooth 61 of the flexible external gear 60 moves on an elliptical locus 68 indicated by the broken line with respect to each internal tooth 67 of the movable internal gear 66. Therefore, each external tooth 61 of the flexible external gear 60 allows the tooth top edge 62 to be repeatedly in contact with the tooth surface of the tooth root portion of the corresponding internal tooth 67 of the movable internal gear 66 approximately at one point. When the flexible external gear 60 is different in the number of teeth from the movable internal gear 66, a movement shown in Fig. 17 (a) and 17(b) takes place.

Therefore, since the fixed internal gear 63 and the movable internal gear 66 respectively and intermittently contact the flexible external gear 60, an angular transmission error is periodically generated between the wave generator and the movable internal gear 66.

Further, in the flexible meshing-type gear device described in Patent Documents 1 and 2, tooth forms of the respective tooth end surfaces of the fixed internal gear, the movable internal gear and the external gear are formed based on movement locus due to rack approximation of an external tooth with respect to each internal tooth and also formed by a map curve due to similarity transformation based on a 1/2 contraction ratio, with a limit position at which each internal tooth is in contact with an external tooth given as an original point. Next, according to the above-described constitution, the tooth surface of an external tooth of the external gear is to be continuously in contact with the tooth surface of each internal tooth of the internal gear. Therefore, according to this constitution, the angular transmission error is decreased.

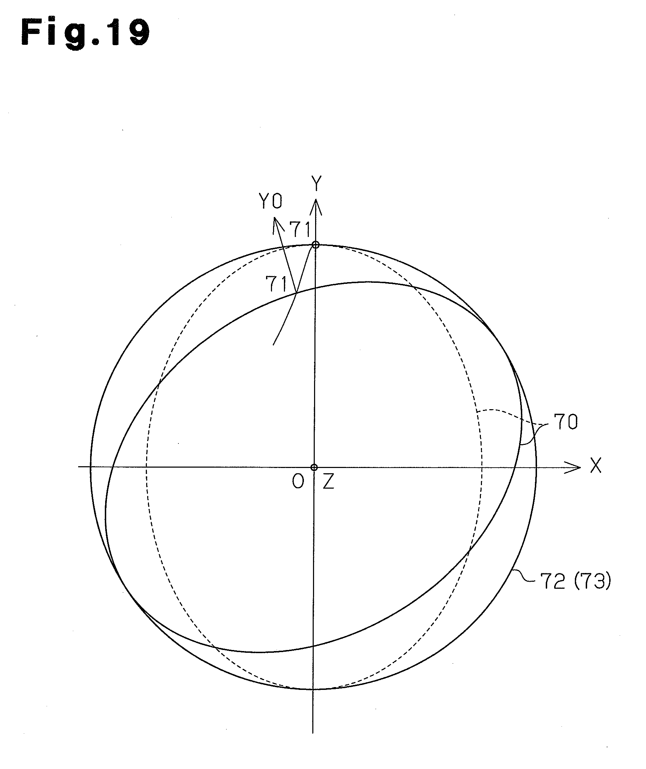

However, each external tooth of the flexible external gear oscillates in association with the rotation of the wave generator. In other words, as shown in Fig. 19, in an X - Y coordinate system in which the rotational axis of the wave generator is given as the Z axis, when the long axis of the flexible external gear 70 is kept in conformity with a direction of the Y axis, for example, (illustrated by the broken line), the flexible external gear 70 meshes respectively with the fixed internal gear 72 and the movable internal gear 73 by an external tooth 71 facing the direction of the Y axis. However, in a state where the long axis of the flexible external gear 70 rotates clockwise from the above state due to the rotation of the wave generator (illustrated by the solid line), the orientation of the external tooth 71 is Y0 at which the external tooth 71 rotates counterclockwise from the direction of the Y axis. In other words, each external tooth of the flexible external gear 70 oscillates with respect to each internal tooth of the fixed internal gear 72 and that of the movable internal gear 73 in association with the rotation of the wave generator.

However, in the flexible meshing-type gear device described in the Patent Documents 1 and 2, the movement locus of an external tooth with respect to each internal tooth is determined based on the rack approximation. In other words, the movement locus is free of an oscillating movement component of an external tooth with respect to each internal tooth. Therefore, the difference between the movement locus and an actual movement locus of an external tooth of the flexible external gear is increased accordingly as the fixed internal gear, the movable internal gear and the flexible external gear become smaller in the number of teeth. Thus, in reality, in the flexible meshing-type gear device described in Patent Documents 1 and 2 as well, such a state is not developed that the flexible external gear is continuously in contact with the fixed internal gear and the movable internal gear, thereby they are intermittently brought into contact with each other repeatedly to cause an angular transmission error. As a result, the flexible meshing-type gear device is not satisfactory in terms of vibration and noise.

Patent Document 1: Japanese Published Laid-Open Patent Publication No. 63-115943
Patent Document 2: Japanese Published Laid-Open Patent Publication No. 1-79448

DISCLOSURE OF THE INVENTION

An objective of the present invention is to provide a flexible meshing-type gear device with a reduced angular transmission error and a steering device for a vehicle including the flexible meshing-type gear device.
In accordance with a first aspect of the present invention, a flexible meshing-type gear device includes a fixed internal gear; a movable internal gear different in the number of teeth from the fixed internal gear and movable coaxially with the fixed internal gear; an annular flexible external gear capable of meshing respectively with the fixed internal gear and the movable internal gear; and a wave generator which supports the flexible external gear to allow a relative rotation inside the flexible external gear so as to mesh with the fixed internal gear and the movable internal gear, thereby allowing a position at which the flexible external gear meshes with the fixed internal gear and the movable internal gear to move in a rotational direction. On the tooth surfaces of the respective internal teeth of the fixed internal gear and the movable internal gear, a meshing surface is formed that conforms to a locus in which the tooth top edge of each external tooth of the flexible external gear moves based on the rotation of the wave generator.
In the flexible meshing-type gear device of the first aspect of the present invention, when rotation is input to the wave generator from outside, the flexible external gear is driven flexibly by the wave generator. Next, the position at which each external tooth of the flexible external gear meshes with each internal tooth of the fixed internal gear and that of the movable internal gear is moved sequentially, thereby the movable internal gear is rotated and driven. As a result, the rotation input to the wave generator from outside is reduced and output externally from the movable internal gear. Further, a meshing surface in conformity with a locus on which the tooth top edge of each external tooth of the flexible external gear moves based on the rotation of the wave generator is formed on the tooth surfaces of the respective internal teeth of the fixed internal gear and the movable internal gear. Therefore, when each external tooth of the flexible external gear meshes with an internal tooth of the fixed internal gear, the tooth top edge of each external tooth is continuously in slidable contact with the meshing surface of the internal tooth. Further, when each external tooth of the flexible external gear meshes with each internal tooth of the movable internal gear, the tooth top edge of each external tooth is continuously in slidable contact with the meshing surface of the internal tooth. Therefore, since each external tooth of the flexible external gear is continuously in contact with each internal tooth of the fixed internal gear and that of the movable internal gear, an angular transmission error is decreased between the wave generator and the movable internal gear.
In a second aspect of the present invention, the meshing surface is caused to retreat in a direction in which the fixed internal gear and the movable internal gear are moved and rotated around the central axis, thereby providing a backlash.
In a third aspect of the present invention, the meshing surface is caused to retreat so that the retreat amount increases from the tooth root of the internal tooth toward the tooth top.
In a fourth aspect of the present invention, the tooth top edge is formed in a circular arc shape.
In a fifth aspect of the present invention, the pressure angle of a tooth surface region leading to an end portion of the tooth top edge of the external tooth closer to the tooth root is equal to the pressure angle of the end portion.
In a sixth aspect of the present invention, a relief angle $\theta\alpha$ of the flexible external gear is set so that the following formula $\theta\alpha + \theta\beta \leq \theta\gamma$ is met based on a tangent angle $\theta\gamma$ at any given point on the meshing surface and an oscillating angle $\theta\beta$ of the external tooth of the flexible external gear.
In a seventh aspect of the present invention, the fixed internal gear or the movable internal gear is made equal in the number of teeth to the flexible external gear.
In accordance with an eighth aspect of the present invention, a steering device for a vehicle is a steering device for a vehicle in which rotation of a steering shaft is transmitted to a pinion shaft, and the rotational output of an electric motor is also transmitted to the pinion shaft via a reduction gear, such that the rotational ratio of the pinion shaft with respect to the steering shaft can be adjusted. The steering device is provided with the flexible meshing-type gear device described in any one of claim 1 to claim 7 as the reduction gear.
In the steering device for a vehicle related to the eight aspect of the present invention, the above constitution is assembled into the steering device, thereby reducing an angular transmission error between the rotational output of an auxiliary electric motor and the rotation of the pinion shaft via the flexible meshing-type gear device based on the rotational output. Therefore, it is possible to improve the accuracy of steering control of a steering wheel based on the control of the electric motor and also improve the steering feel due to a decrease in vibration and noise.

BRIEF DESCRIPTION OF THE DRAWINGS

Fig. 1 is a front elevational view showing a flexible meshing-type gear device;
Fig. 2 is a vertical cross-sectional view showing the gear device shown in Fig. 1;
Fig. 3 is a vertical cross-sectional view showing a steering device;
Figs. 4 (a) and 4(b) are both front elevational views showing a part of a fixed internal gear and a part of a flexible external gear in the flexible meshing-type gear device according to a first embodiment;
Fig. 5 is a front elevational view showing a meshing surface of the fixed internal gear shown in Fig. 4;
Figs. 6 (a) and 6(b) are both front elevational views showing a part of a movable internal gear and a part of a flexible external gear of the flexible meshing-type gear device according to the first embodiment;
Fig. 7 is a front elevational view showing a meshing surface of the movable internal gear of Fig. 6;
Fig. 8 is a front elevational view showing the fixed internal gear meshing with the flexible external gear according to a modification of the first embodiment;
Fig. 9 is a front elevational view showing the movable internal gear meshing with the flexible external gear according to the modification of the first embodiment;
Fig. 10 is a front elevational view showing an external tooth of the flexible external gear and an internal tooth of the fixed internal gear according to the modification of the first embodiment;
Fig. 11 is a front elevational view showing the external tooth of the flexible external gear and an internal tooth of the movable internal gear according to the modification of the first embodiment;
Fig. 12 is a front elevational view showing an internal tooth of the fixed internal gear and an external tooth of the flexible external gear according to a second embodiment;
Figs. 13 (a), 13(b), and 13(c) are graphs showing an angular transmission error with respect to an input angle;
Fig. 14 is a front elevational view showing an external tooth of the flexible external gear according to a third embodiment;
Fig. 15 is a front elevational view showing an internal tooth of the movable internal gear and an external tooth of the flexible external gear according to the third embodiment;
Fig. 16 is a front elevational view showing an internal tooth of the fixed internal gear and an external tooth of the flexible external gear according to a fourth embodiment;
Figs. 17(a) and 17(b) are both diagrams showing a part of the fixed internal gear and a part of the flexible external gear in a conventional flexible meshing-type gear device;
Figs. 18(a) and 18(b) are both diagrams showing a part of the movable internal gear and a part of the flexible external gear in the conventional flexible meshing-type gear device; and
Fig. 19 is a diagram showing a movement of the flexible external gear.

BEST MODE FOR CARRYING OUT THE INVENTION

Hereinafter, an explanation will be made of the first embodiment according to the present invention with reference to Figs. 1 to 9.

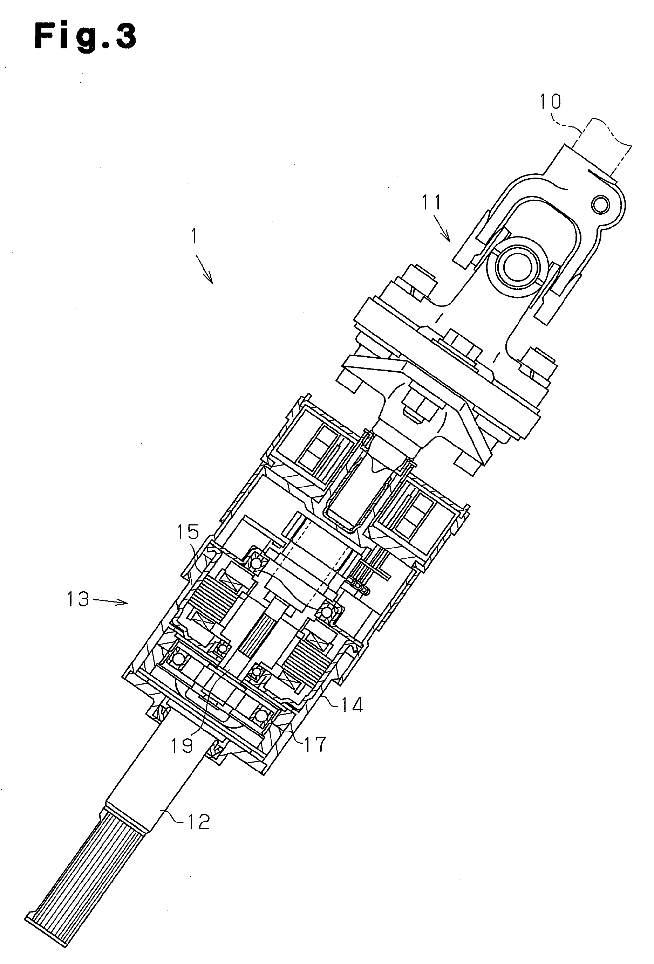

Fig. 3 shows a steering device 1 which is mounted on a vehicle. The steering device 1 is provided with a universal joint 11 to which a steering shaft 10 is connected, a pinion shaft 12 connected to a steering gear box (not illustrated), and a variable transmission ratio device 13 which connects the universal joint 11 with the pinion shaft 12. The variable transmission ratio device 13 is provided with a housing 14 coupled to the universal joint 11 and also provided, inside the housing 14, with a DC motor (electric motor) 15 arranged coaxially with the pinion shaft 12, and a flexible meshing-type gear device 17 which outputs the rotation input from an output shaft 19 of the DC motor 15 to the pinion shaft 12. The above-constituted steering device 1 transmits the rotation of the steering shaft 10 to the pinion shaft and also transmits the rotational output of the DC motor 15 to the pinion shaft via the flexible meshing-type gear device 17, thereby adjusting the rotational ratio of the pinion shaft 12 to the steering shaft 10.
As shown in Figs. 1 and 2, the flexible meshing-type gear device 17 is provided with an annular fixed internal gear 20 (illustrated only in Fig. 2) which is fixed and supported on the housing 14. The number of teeth of the fixed internal gear 20 is set to be 102, for example. A movable internal gear 21 smaller in the number of teeth than the fixed internal gear 20 is supported on the pinion shaft 12 of the fixed internal gear 20 so as to be rotatable with respect to the housing 14 coaxially with the fixed internal gear 20. The number of teeth of the movable internal gear 21 is set to be 100, for example.
Inside the fixed internal gear 20 and the movable internal gear 21, provided is an annular flexible external gear 22 which has the same number of teeth as the movable internal gear 21 and meshes respectively with the fixed internal gear 20 and the movable internal gear 21.
Further, inside the flexible external gear 22, provided is an elliptical wave generator 23 which supports the flexible external gear 22 from the inner circumference so as to allow a relative rotation and allows the flexible external gear 22 to mesh with the fixed internal gear 20 and the movable internal gear 21 respectively at two opposing positions. The wave generator 23 is rotated based on the rotational input from the output shaft 19 of the DC motor 15, thereby changing a position at which the flexible external gear 22 meshes with the fixed internal gear 20 and the movable internal gear 21. As a result, the movable internal gear 21 moves rotationally only by the difference in the number of teeth of the fixed internal gear 20 per rotation of the wave generator 23.

The above-constituted variable transmission ratio device 13 is controlled for a rotational angle of the DC motor 15, for example, based on the turning angle of a steering wheel and the speed of a vehicle. Thereby, the tire angle of the front wheel is controlled depending on the turning angle of the steering wheel and the speed of the vehicle.

In other words, when the rotation is input from the DC motor 15 to the wave generator 23, the flexible external gear 22 is driven by the wave generator 23. Next, each external tooth 25 of the flexible external gear 22 sequentially meshes with each internal tooth 24 of the fixed internal gear 20 and each internal tooth 29 of the movable internal gear 21, while the meshing position is being moved. In this instance, since the movable internal gear 21 is smaller in the number of teeth than the fixed internal gear 20, and the movable internal gear 21 is equal in the number of teeth to the flexible external gear 22, the movable internal gear 21 is rotated. As a result, the rotation input from the output shaft 19 of the DC motor 15 to the wave generator 23 is decreased and output from the movable internal gear 21 to the pinion shaft 12. Therefore, in rotating and steering the steering wheel, the DC motor is rotated positively or reversely, by which the pinion shaft 12 is increased or decreased in speed according to the rotational input of the DC motor 15. Thereby, it is possible to adjust the steering feel depending on the traveling speed or the like of a vehicle.

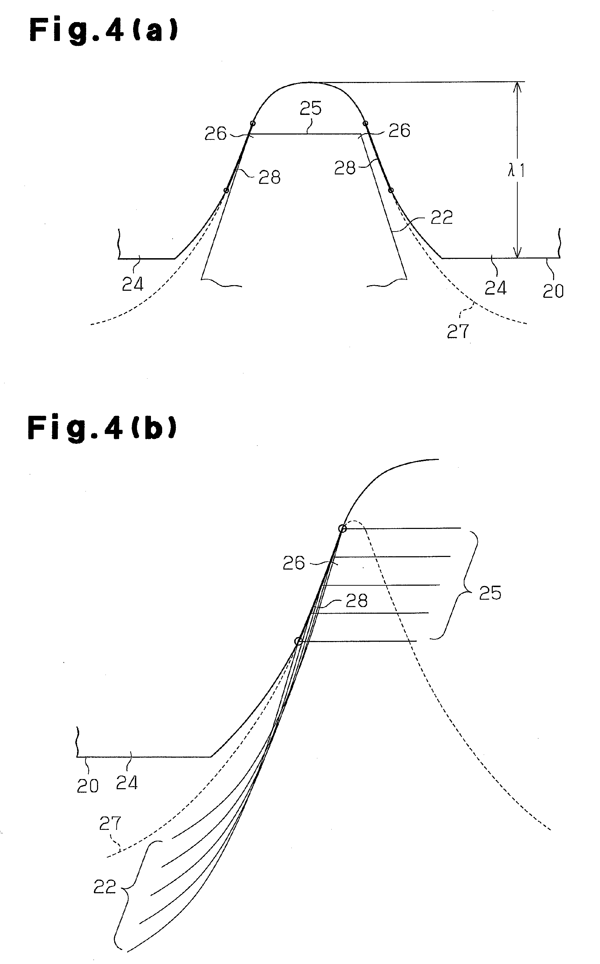

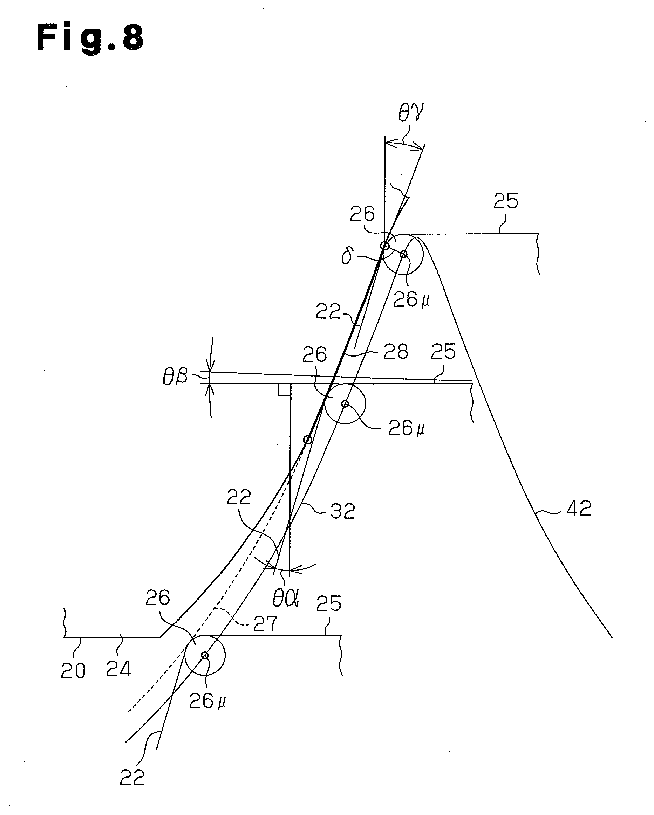

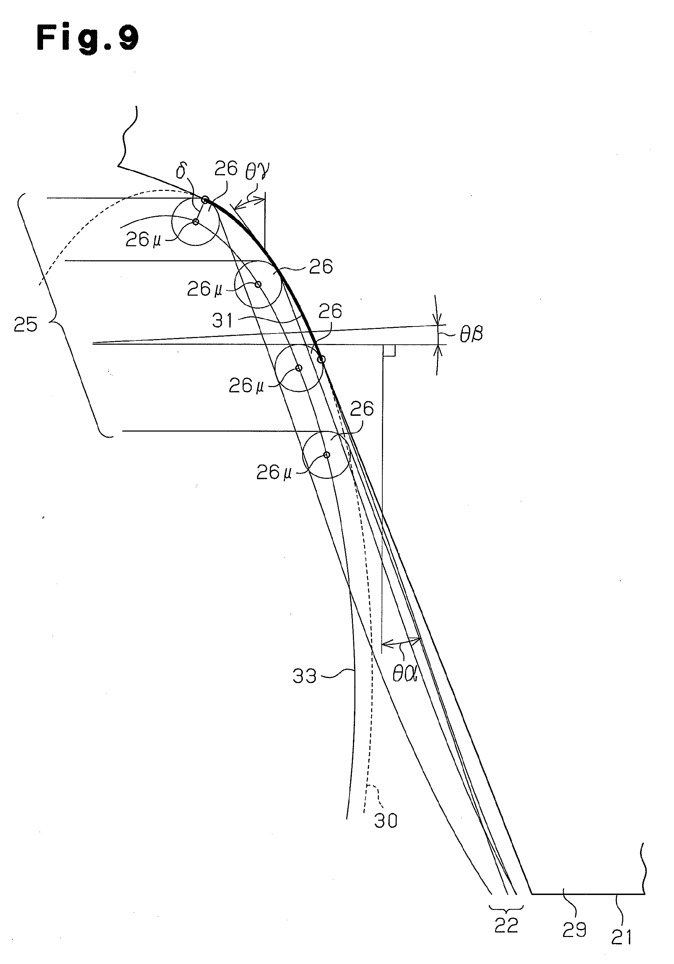

Next, an explanation will be made of a configuration of each internal tooth of the fixed internal gear 20 and that of the movable internal gear 21 with reference to Figs. 4 to 7. It is noted that each external tooth of the flexible external gear 22 is of an involute tooth form having a pressure angle of 18 degrees, for example. Further, in Figs. 4 to 7, the tooth top edge 26 of the external tooth 25 is formed in a straight configuration. Nonetheless, as shown in Figs. 8 and 9, the tooth top edge 26 may be formed in a circular arc shape.

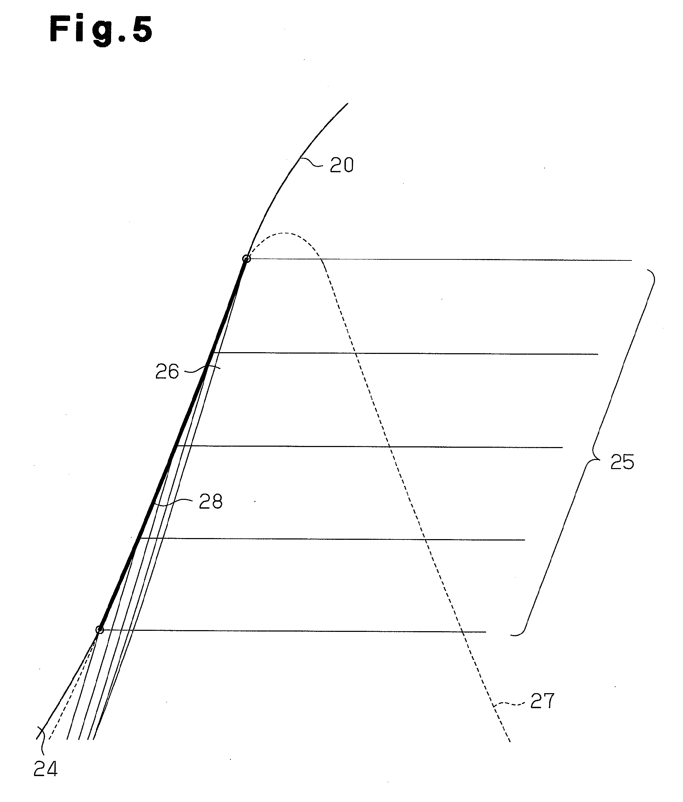

First, an explanation will be made of a configuration of the internal tooth 24 of the fixed internal gear 20. Figs. 4(a), 4(b), and 5 show a state where one external tooth 25 of the flexible external gear 22 meshes with one internal tooth 24 of the fixed internal gear 20 in association with the rotation of the wave generator 23. On the tooth surface of each internal tooth 24 of the fixed internal gear 20 and on a locus 27 on which the tooth top edge 26 of the external tooth 25 actually moves in association with the rotation of the wave generator 23, a meshing surface 28 (indicated by the thick line) conforming to the locus 27 is formed. On both sides of the meshing surface 28 in the vertical direction shown in Fig. 4(b), a relief configuration indicated by a cubic curve is formed. The meshing surface 28 is formed on both sides of each internal tooth 24 so as to correspond to a case where the wave generator 23 is rotated in both directions. Next, the meshing surface 28 is formed in a range from 1/6 to 4/6 with respect to the height λ1 of the internal tooth 24.

Next, since the fixed internal gear 20 is different in the number of teeth from the flexible external gear 22, and fixed internal gear 20 is kept fixed, the tooth top edge 26 of the external tooth 25 moves on the locus 27 indicated by the broken line with respect to each internal tooth 24 of the fixed internal gear 20 as shown in Figs. 4 (b) and 5, in association with the rotation of the wave generator 23. Next, the tooth top edge 26 of the external tooth 25 is continuously in slidable contact with the meshing surface 28 of each internal tooth 24 of the fixed internal gear 20.

Next, an explanation will be made of a configuration of each internal tooth 29 of the movable internal gear 21.

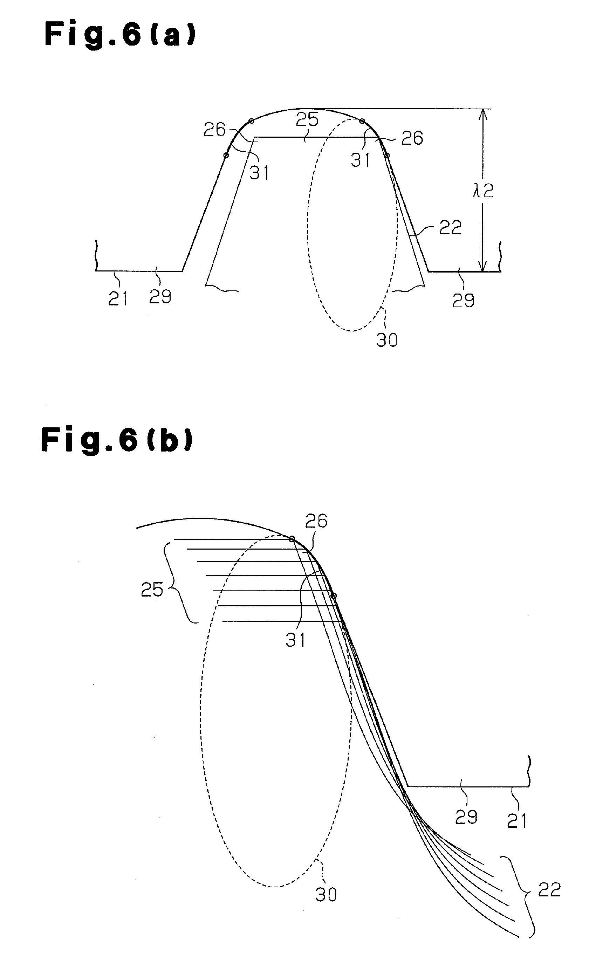

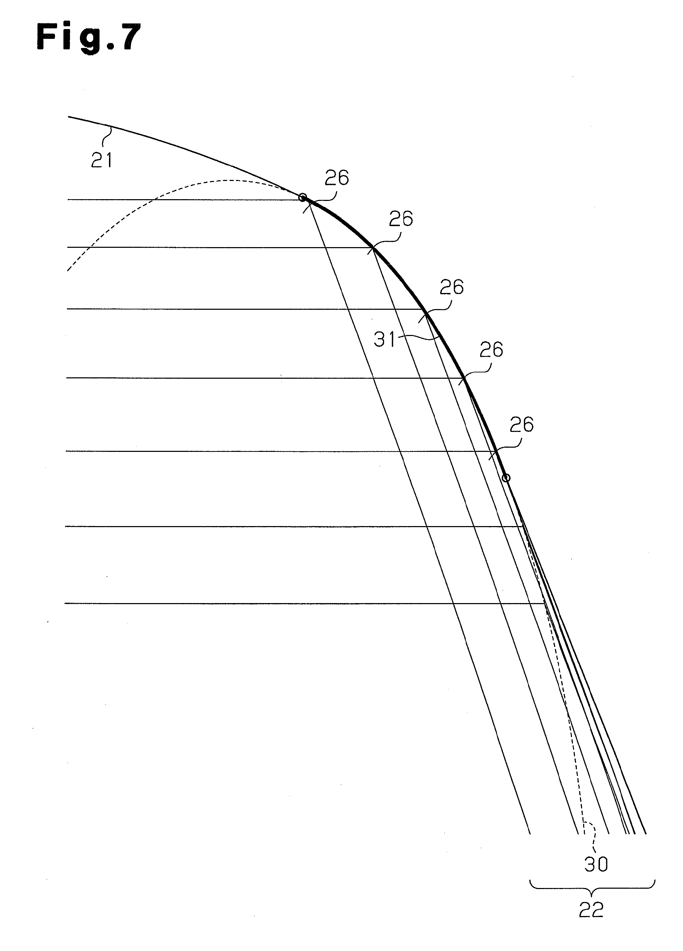

Figs. 6(a), 6(b) and 7 show a state where one external tooth 25 of the flexible external gear 22 meshes with one internal tooth 29 of the movable internal gear 21 in association with the rotation of the wave generator 23. On the tooth surface of each internal tooth 29 of the movable internal gear 21 and on a locus 30 on which the tooth top edge 26 of the external tooth 25 actually moves in association with the rotation of the wave generator 23, a meshing surface 31 (indicated by the thick line) conforming to the locus 30 is formed. On both sides of the meshing surface 31 in the vertical direction shown in Fig. 6(b), a relief configuration indicated by a cubic curve is formed. The meshing surface 31 is formed on both sides of each internal tooth 29 so as to correspond to a case where the wave generator 23 is rotated in both directions. Next, the meshing surface 31 is formed in a range from 1/6 to 4/6 with respect to the height λ2 of the internal tooth 29.

Next, since the movable internal gear 21 is equal in the number of teeth to the flexible external gear 22 and the movable internal gear 21 can be rotated, the tooth top edge 26 of the external tooth 25 moves on the oblong locus 30 indicated by the broken line with respect to each internal tooth 29 of the movable internal gear 21 as shown in Figs. 6(b) and 7, in association with the wave generator 23. Next, the tooth top edge 26 of the external tooth 25 is in slidable contact with the meshing surface 31 of the corresponding internal tooth 29 of the movable internal gear 21.

As described above, when the flexible external gear 22 is driven by the rotation of the wave generator 23, each external tooth 25 of the flexible external gear 22 is continuously in contact with the meshing surfaces 28 and 31 of the respective internal teeth 24 and 29 of the fixed internal gear 20 and the movable internal gear 21. Therefore, an angular transmission error is decreased between the wave generator 23 and the movable internal gear 21.

Next, an explanation will be made in detail for a state in which the tooth top edge 26 is in slidable contact with the meshing surface 28 of the internal tooth 24 of the fixed internal gear 20, where the tooth top edge 26 of the external tooth 25 of the flexible external gear 22 is formed in a circular arc shape, as shown in Fig. 8. When the tooth top edge 26 of the external tooth 25 is in slidable contact with the meshing surface 28 of the internal tooth 24, a circular arc center point $26\mu$ of the tooth top edge 26 moves on a locus 32 spaced away from the locus 27 only by a radius $\delta$ of the circular arc of the tooth top edge 26.

Further, as shown in Fig. 9, when the circular arc-shaped tooth top edge 26 of the external tooth 25 is in slidable contact with the meshing surface 31 of the internal tooth 29 of the movable internal gear 21, the circular arc center point $26\mu$ of the tooth top edge 26 moves on a locus 33 spaced away from the locus 30 only by a radius $\delta$ of the circular arc of the tooth top edge 26.

A tooth form of the internal tooth 24 of the fixed internal gear 20 and that of the internal tooth 29 of the movable internal gear 21 are set as follows based on the circular arc of the tooth top edge 26 of the external tooth 25 of the flexible external gear 22.

First, the loci 27 and 30 spaced externally away only by a radius $\delta$ of the circular arc of the tooth top edge 26 are determined respectively from the loci 32 and 33 on which the circular arc center point $26\mu$ of the tooth top edge 26 of the external tooth 25 moves based on the rotation of the wave generator 23.

Next, ranges in which the loci 27 and 30 are allowed to conform to the tooth surface of the internal tooth 24 of the fixed internal gear 20 and to that of the internal tooth 29 of the movable internal gear 21, respectively, in other words, meshing surfaces 28 and 31 of the tooth top edge 26 of the external tooth 25 are determined. Finally, an escape angle $\theta\alpha$ of the external tooth 25 of the flexible external gear 22 is set so that the following formula is established.

$$\theta\alpha \ + \ \theta\beta \ \leq \ \theta\gamma$$

where $\theta\beta$ is an oscillating angle of the external tooth 25 of the flexible external gear 22, and $\theta\gamma$ is a tangent angle at any position of the meshing surfaces 28 and 31.

Therefore, the tooth top edge 26 of the external tooth 25 is allowed to be continuously in slidable contact with the respective internal teeth 24 and 29 of the fixed internal gear 20 and the movable internal gear 21, while avoiding their mutual interference. As described above, in the present embodiment, on the tooth surfaces of the respective internal teeth 24 and 29 of the fixed internal gear 20 and the movable internal gear 21, the meshing surfaces 28 and 31 conforming partially to the loci 27 and 30 on which the tooth top edge 26 of each external tooth 25 of the flexible external gear 22 moves are respectively formed. Therefore, since each external tooth 25 of the flexible external gear 22 is continuously in slidable contact with the respective internal teeth 24 and 29 of the fixed internal gear 20 and the movable internal gear 21, an angular transmission error between the wave generator 23 and the movable internal gear 21 is decreased to suppress vibration and noise.

Further, an angular transmission error between the rotational output of the DC motor 15 and the rotation of the pinion shaft 12 via the flexible meshing-type gear device 17 based on the rotational output is decreased. Thus, it is possible to improve the steering control accuracy of the steering wheel based on the control of the DC motor 15 and also improve the steering feel in combination with the decrease in vibration and noise.

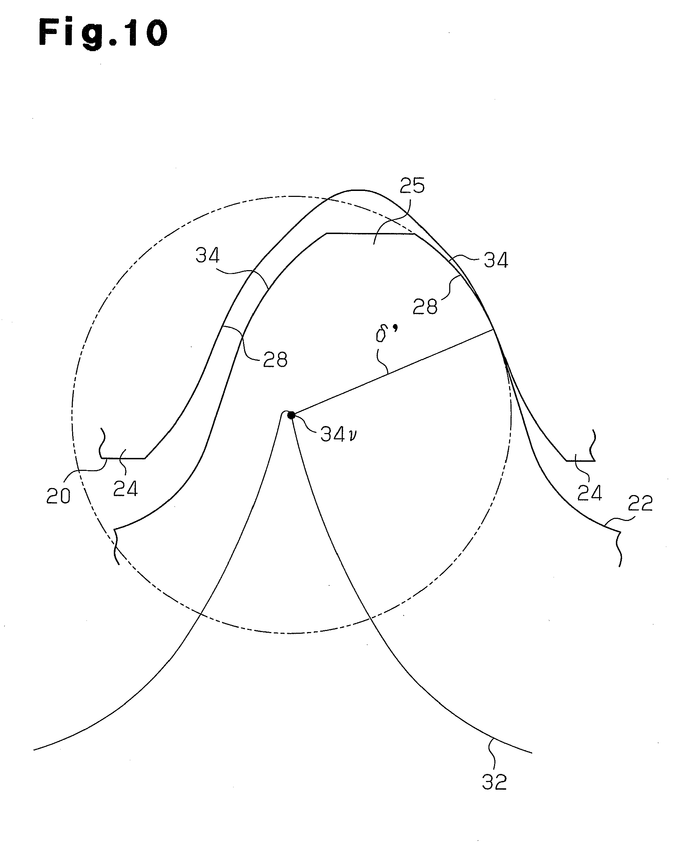

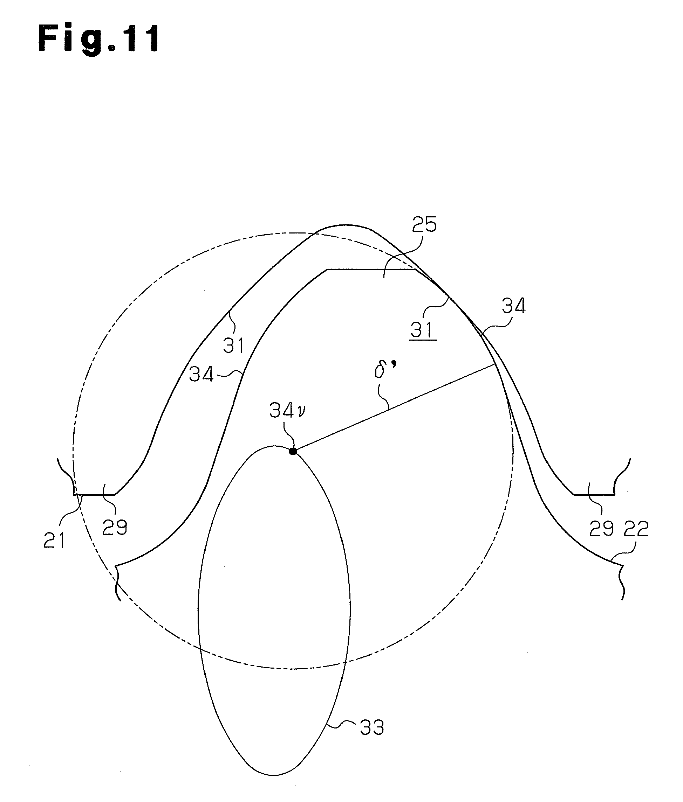

Next, an explanation will be made of a modification of the first embodiment according to the present invention with reference to Figs. 10 and 11. The modification is constituted as follows.

As shown in Figs. 10 and 11, a circular arc portion 34 corresponding to the tooth top edge 26 of the external tooth 25 shown in Figs. 4 to 9 is formed at the tooth surface distal end portion of the external tooth 25. The circular arc portion 34 is formed with a great radius to improve the wear resistance of the external tooth 25. In other words, the circular arc portion 34 is formed on a circular arc having a radius $\delta'$ of 1/2 or greater of the tooth width of the external tooth 25. A center point $34\nu$ of the circular arc draws the loci 32 and 33 in association with the rotation of the flexible external gear 22. The tooth top of the external tooth 25 is cut so as not to interfere with the tooth root of the internal tooth 24 of the fixed internal gear 20 or the tooth root of the internal tooth 29 of the movable internal gear 21. It is noted that the circular arc portion 34 may also be formed in a circular arc having a radius greater than the tooth width of the external tooth 25.

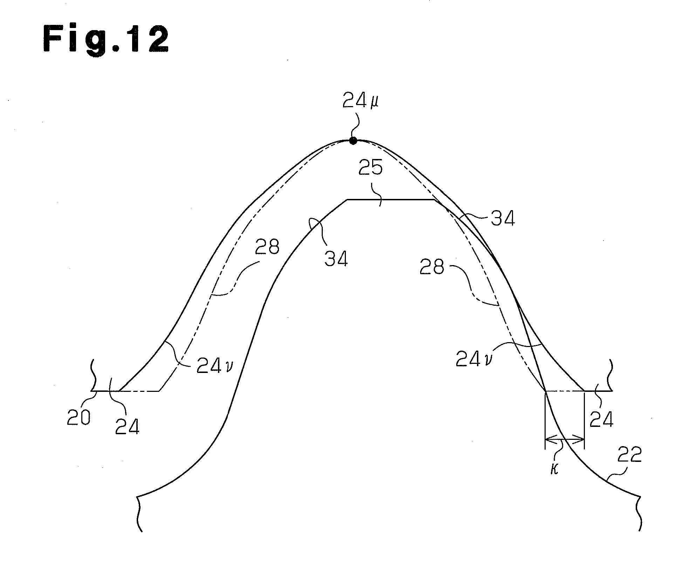

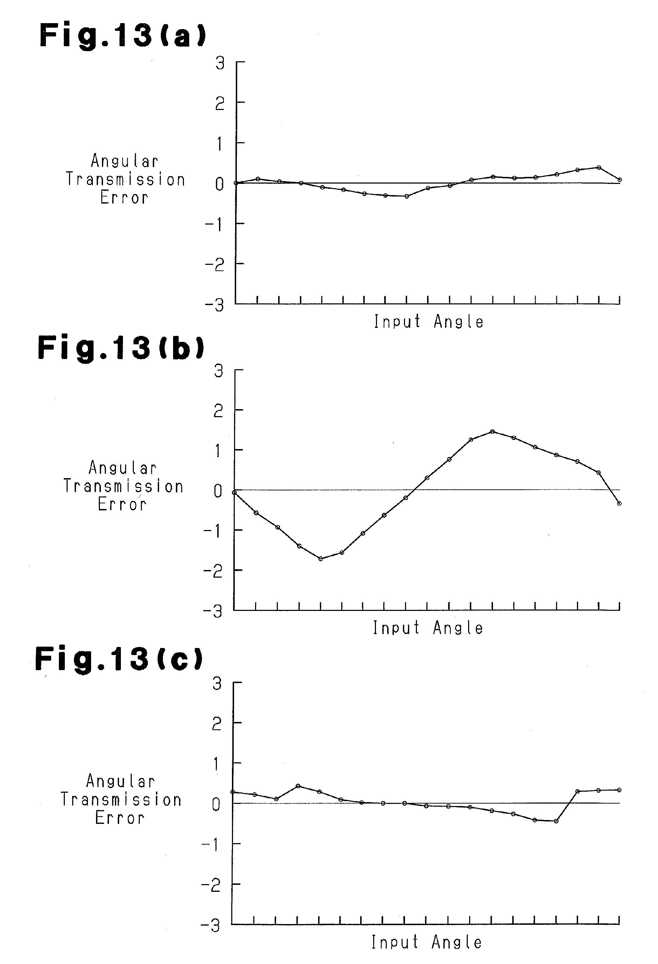

Next, an explanation will be made of a second embodiment of the present invention with reference to Figs. 12 and 13. The present embodiment is different in that the internal teeth 24 and 29 of the internal gears 20 and 21 in the first embodiment are changed in configuration.

As indicated by the solid line in Fig. 12, both tooth surfaces $24\nu$ of the internal tooth 24 of the fixed internal gear 20 are formed in such a configuration that the meshing surface 28 is allowed to move rotationally about the center of the central position $24\mu$ of the tooth root between both adjacent internal teeth 24 with respect to the meshing surface 28 of the first embodiment indicated by the alternate long and two short dashes line and is caused to retreat, for example, by a retreat amount of about $\kappa = 2\ \mu m$ from the meshing surface 28 at the tooth top edge of the internal tooth 24. Further, although not illustrated, both tooth surfaces of the internal tooth 29 of the movable internal gear 21 are formed, as with the tooth surface $24\nu$ of the internal tooth 24, in such a configuration that the meshing surface 31 is allowed to move rotationally about the center of the central position of the tooth root between both adjacent internal teeth 29 with respect to the meshing surface 31.

Due to variations at the time of manufacturing, a tooth form error exists in the external tooth 25 of the flexible external gear 22 and in the respective internal teeth 24 and 29 of the fixed internal gear 20 and the movable internal gear 21. It is, for example, assumed that an actual tooth surface 24v of the internal tooth 24 of the fixed internal gear 20 is caused to retreat so that the retreat amount is gradually increased from the tooth top of the internal tooth 24 toward the tooth root with respect to the meshing surface 28. In this instance, an angular transmission error between an ideal output angle from the movable internal gear 21 with respect to an input angle to the flexible external gear 22, and an actual output angle is increased with respect to an angular transmission error in a case where the tooth surface 24v of the internal tooth 24 is in conformity with the meshing surface 31. That is, in a case where there is no tooth form error in the internal tooth 24 and the tooth surface 24v is in conformity with the meshing surface 28, the angular transmission error changes with respect to an input angle to the flexible external gear 22, as shown in Fig. 13(a). On the other hand, in a case where an actual tooth surface 24v is caused to retreat so that the retreat amount is gradually increased from the tooth top toward the tooth root with respect to the meshing surface 28, the angular transmission error is increased over the entire range of the input angle to the flexible external gear 22 as shown in Fig. 13(b). The angular transmission error is obtained through calculations. In contrast to this, if, as in the preset embodiment, the actual tooth surface 24v of the fixed internal gear 20 is caused to retreat such that the retreat amount is gradually increased from the tooth root to the distal end, the angular transmission error is decreased in the entire range of the input angle as shown in Fig. 13 (c). According to the present embodiment, even if the forms of the internal teeth 24 vary, the actual tooth surface 24v is not caused to retreat so that the retreat amount is gradually increased from the tooth top toward the tooth root. Therefore, the angular transmission error in the flexible meshing-type gear device 17 is prevented from increasing. Also, as in the case of the fixed internal gear 20, the meshing surface 31 of the movable internal gear 21 is deformed as described above. The angular transmission error in the output angle from the movable internal gear 21 in relation to the input angle into the flexible external gear 22 is prevented from increasing.

As described above, in the present embodiment, the actual tooth surfaces 24v of the internal teeth 24 and 29 are caused to retreat so that the retreat amount is gradually increased from the tooth root toward the tooth top with respect to the meshing surface 28. Therefore, even if there is a tooth form error in the respective internal teeth 24 and 29 of the fixed internal gear 20 and the movable internal gear 21, an increase in the angular transmission error is suppressed. Thus, the flexible meshing-type gear device 17 is free from any increase in angular transmission error, thereby making it possible to improve the productivity by decreasing the accuracy of manufacturing the fixed internal gear 20 and the movable internal gear 21.

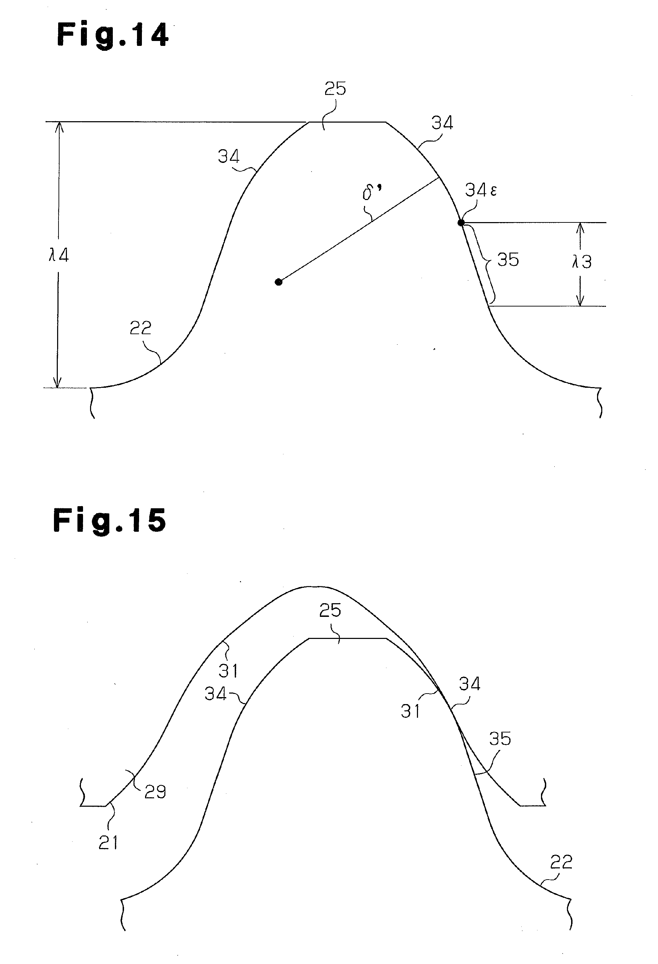

Next, an explanation will be made of a third embodiment according to the present invention with reference to Figs. 14 and 15. The present embodiment is different in that a configuration of the external tooth 25 of the flexible external gear 22 in the modification of the first embodiment shown in Figs. 10 and 11 is changed.

As shown in Fig. 14, a pressure angle of the tooth surface region 35 leading to an end portion 34ε of the tooth root of the circular arc portion 34 on the external tooth 25 of the flexible external gear 22 is set to be equal to a pressure angle of the end portion 34ε of the circular arc portion 34, in other words, a minimum pressure angle (20 degrees, for example) at the circular arc portion 34. The height λ3 of the tooth surface region 35 is set in a range from 1/6 to 1/3 of a tooth height λ4 of the external tooth 25.

As shown in Fig. 15, when the flexible external gear 22 is brought into contact with the movable internal gear 21 at a high pressure, the movable internal gear 21 and the flexible external gear 22 are elastically deformed, by which ratcheting is likely to occur between them. In the present embodiment, a pressure angle of the tooth surface region 35 leading to the end portion 34ε of the tooth root at the circular arc portion 34 of the external tooth 25 is set to be the minimum pressure angle, as with the end portion 34ε of the circular arc portion 34. Therefore, in a portion where the tooth surface region 35 of the external tooth 25 and the internal teeth 24, 29 mesh with each other, even if the meshing position is moved toward the tooth root of the external tooth 25 due to the bending of the external tooth 25 caused by the elastic deformation of the flexible external gear 22, the minimum pressure angle is maintained. Thus, a component of force that acts to overlap the external tooth 25. As a result, ratcheting between the flexible external gear 22 and the fixed and movable internal gears 20, 21 is prevented from occurring.

As described above, in the present embodiment, the pressure angle of the tooth surface region 35 leading to the end portion 34ε on the tooth root of the circular arc portion 34 in the external tooth 25 of the flexible external gear 22 is set to be equal to the pressure angle of the end portion 34ε. Therefore, ratcheting is suppressed from occurring between the flexible external gear 22 and the fixed and movable internal gears 20, 21, so that an angular transmission deviation in the flexible meshing-type gear device 17 is suppressed from occurring.

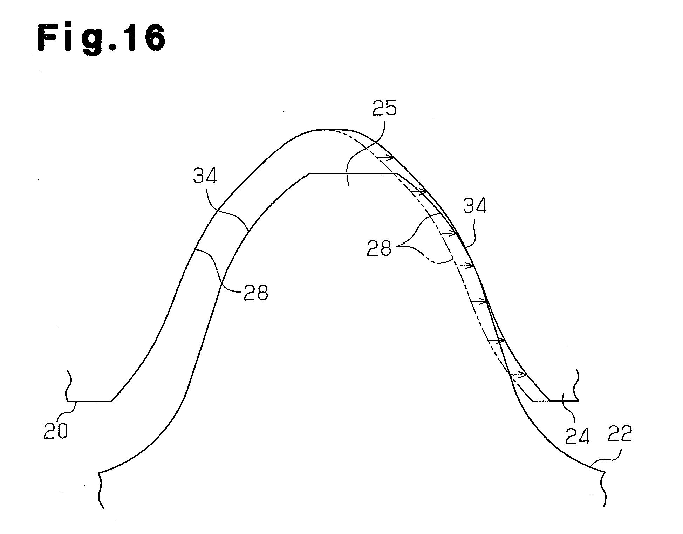

Next, an explanation will be made of a fourth embodiment of the present invention with reference to Fig. 16. The present embodiment is different in that the configurations of the internal teeth 24 and 29 of the internal gears 20 and 21 in the first embodiment are changed.

As shown in Fig. 16, the meshing surface 28 of the internal tooth 24 is caused to retreat by approximately 6° to 9° in a direction in which the fixed internal gear 20 is moved and rotated around the central axis with respect to an ideal tooth form, thereby providing a backlash. Thus, tooth forms constituting the meshing surfaces 28 and 31 are moved in a direction in which the flexible external gear 22 is rotated. Therefore, unlike a case where the meshing surfaces 28 and 31 are moved radially to form a backlash, a pitch circle or the like is prevented from being changed, thus making it possible to obtain a smooth meshing by suppressing an angular transmission error.

As described above, in the present embodiment, the meshing surfaces 28 and 31 of the internal teeth 24 and 29 are caused to retreat in a direction in which the fixed internal gear 20 and the movable internal gear 21 are moved and rotated around the central axis, thereby forming a backlash. Thus, a pitch extension or the like is prevented from being changed, thereby suppressing an angular transmission error and allowing the flexible external gear 22 to smoothly mesh with the fixed internal gear 20 and the movable internal gear 21.

The present invention is not restricted to the above embodiments, and the fixed internal gear 20 may be equal in the number of teeth to the flexible external gear 22, and the movable internal gear 21 may be different in the number of teeth from the flexible external gear 22. In this instance, the tooth top edge 26 of the external tooth 25 of the flexible external gear 22 is in slidable contact with the meshing surface 28 of the corresponding internal tooth 24 of the fixed internal gear 20 and also sequentially in slidable contact with the meshing surface 31 of each internal tooth 29 of the movable internal gear 21.

Further, the fixed internal gear 20, the movable internal gear 21 and the flexible external gear 22 may be different from each other in the number of teeth. In this instance, the tooth top edge 26 of the external tooth 25 of flexible external gear 22 is sequentially in slidable contact with the meshing surface 28 of the internal tooth 24 of the fixed internal gear 20 and also sequentially in slidable contact with the meshing surface 31 of each internal tooth 29 of the movable internal gear 21.

Still further, the wave generator 23 may be formed in an eccentric circle or in a polygonal configuration such as a substantially triangular shape, a substantially rectangular shape or a substantially pentagonal shape, and the flexible external gear 22 may mesh with the fixed internal gear 20 and the movable internal gear 21 respectively at a single point, three points, four points, five points or the like.

## Claims

1. A flexible meshing-type gear device comprising:

a fixed internal gear;
a movable internal gear different in the number of teeth from the fixed internal gear and rotatable coaxially with the fixed internal gear;
an annular flexible external gear capable of meshing respectively with the fixed internal gear and the movable internal gear; and
a wave generator which supports the flexible external gear inside the flexible external gear to allow a relative rotation so as to mesh with the fixed internal gear and the movable internal gear, thereby allowing a position at which the flexible external gear meshes with the fixed internal gear and the movable internal gear to move in a rotational direction,

the flexible meshing-type gear device being **characterized in that,** on the tooth surfaces of the respective internal teeth of the fixed internal gear and the movable internal gear, a meshing surface is formed that conforms to a locus on which the tooth top edge of each external tooth of the flexible external gear moves based on the rotation of the wave generator.

2. The flexible meshing-type gear device according to claim 1, **characterized in that** the meshing surface is caused to retreat in a direction in which the fixed internal gear and the movable internal gear are moved and rotated around the central axis, thereby providing a backlash.

3. The flexible meshing-type gear device according to claim 1 or 2, **characterized in that** the meshing surface is caused to retreat such that the retreat amount is gradually increased from the tooth root to the tooth top of the internal tooth.

4. The flexible meshing-type gear device according to any one of claims 1 to 3, **characterized in that** the tooth top edge is formed in a circular arc shape.

5. The flexible meshing-type gear device according to claim 4, **characterized in that** the pressure angle of a tooth surface region leading to an end portion of the tooth top edge of the external tooth closer to the tooth root is equal to the pressure angle of the end portion.

6. The flexible meshing-type gear device according to any one of claims 1 to 5, **characterized in that** a relief angle $\theta\alpha$ of the flexible external gear is set such that the following formula $\theta\alpha + \theta\beta \leq \theta\gamma$ is established based on a tangent angle $\theta\gamma$ at any given point on the meshing surface and an oscillating angle $\theta\beta$ of the external tooth of the flexible external gear.

7. The flexible meshing-type gear device according to any one of claims 1 to 6, **characterized in that** the fixed internal gear or the movable internal gear is made equal in the number of teeth to the flexible external gear.

8. A steering device for a vehicle, wherein rotation of a steering shaft is transmitted to a pinion shaft and the rotational output of an electric motor is also transmitted to the pinion shaft via a reduction gear, thereby allowing the rotational ratio of the pinion shaft to the steering shaft to be adjusted, the steering device being **characterized by** using the flexible meshing-type gear device according to any one of claims 1 to 7 as the reduction gear.

# Fig.1

16 (17)

29
21
25
22
23

# Fig.2

16 (17)

21  25  20
29  24
23
22

# Fig.3

# Fig.4(a)

# Fig.4(b)

# Fig.5

# Fig.6(a)

# Fig.6(b)

# Fig.7

# Fig.8

# Fig.9

# Fig.10

# Fig.11

# Fig.12

# Fig.13(a)

Angular
Transmission
Error

Input Angle

# Fig.13(b)

Angular
Transmission
Error

Input Angle

# Fig.13(c)

Angular
Transmission
Error

Input Angle

# Fig.14

# Fig.15

# Fig.16

# Fig.17(a)

# Fig.17(b)

## Fig.18(a)

## Fig.18(b)

# Fig.19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63115943 A
- JP 1079448 A